# EUROPEAN PATENT APPLICATION

(11) **EP 3 166 349 A1**
(43) Date of publication of application: **10.05.2017**
(21) Application number: 14889146.8
(22) Date of filing: 04.08.2014
(51) Int. Cl.: H04W 8/18

(54) **INTERNET ACCESS TRAFFIC SHARING METHOD, DEVICE AND TERMINAL**

(30) Priority: 03.07.2014 CN 201410317410
(71) Applicant: ZTE Corporation, Shenzhen, Guangdong 518057 (CN)
(72) Inventor: TANG, Lin, Shenzhen Guangdong 518057 (CN)
(74) Representative: Savi, Massimiliano
(86) International application number: PCT/CN2014/083655
(87) International publication number: WO 2015/154350

(57) **Abstract**

The present invention provides a processing method and device for Internet traffic sharing and a terminal. Herein, the method includes that: request information carrying applied traffic, sent by a first terminal, is received; whether the applied traffic is within a limited shared traffic range predetermined by a second terminal which provides traffic sharing is judged; and Internet traffic is shared to the first terminal under a condition that a judgment result is YES. By the present invention, the problems of traffic resource waste and poor user experiences caused by incapability of effectively controlling resource traffic during resource sharing in a related art are solved, and effects of effectively controlling Internet resource sharing and avoiding huge phone bills of a sharing party are further achieved.

## Description

### Technical Field

The present invention relates to the field of communication, and more particularly to a processing method and device for Internet traffic sharing and a terminal.

### Background

Along with popularization and spreading of a Long Term Evolution LTE technology, ranges of LTE networking construction and audience are gradually widened, and high-speed data access based on LTE technology increasingly becomes a new favorite of a mobile terminal data service. However, a consequent conflict between high-traffic data service requirements and traffic fee also makes people pay more and more attention to traffic limits in various communication packages formulated by operators for terminal users.

In addition, an LTE mobile terminal supporting a Wireless Fidelity WIFI function not only may make a user enjoy a high-speed LTE data service, but also may serve as a WIFI hotspot to share a high-speed Internet access experience and redundant data traffic to a mobile terminal around which does not customize an LTE service but has the WIFI function.

However, the above-mentioned application may easily generate huge phone bills due to high fee of LTE and limitation of traffic limits. Therefore, there are the problems of traffic resource waste and poor user experiences caused by incapability of effectively controlling resource traffic during resource sharing in a related art.

### Summary of the Invention

The present invention provides a processing method and device for Internet traffic sharing and a terminal to at least solve the problems of traffic resource waste and poor user experiences caused by incapability of effectively controlling resource traffic during resource sharing in the related art.

According to one aspect of the present invention, a processing method for Internet traffic sharing is provided. The method includes that: receiving request information carrying applied traffic and sent by a first terminal; judging whether the applied traffic is within a limited shared traffic range predetermined by a second terminal which provides traffic sharing; and sharing the Internet traffic to the first terminal under a condition that a judgment result is YES.

The predetermined limited shared traffic range may include at least one of: remaining traffic of the second terminal and predetermined traffic exceeding the remaining traffic of the second terminal.

Alternatively, said sharing the Internet traffic to the first terminal may include that: the remaining traffic of the second terminal is monitored; whether the remaining traffic of the second terminal reaches a preset threshold value is judged; and sharing of the Internet traffic to the first terminal is terminated under a condition that a judgment result is YES.

Alternatively, said sharing the Internet traffic to the first terminal include that: shared Internet traffic used by the first terminal is monitored; whether the shared Internet traffic used by the first terminal reaches the applied traffic is judged; and sharing of the Internet traffic to the first terminal is terminated under a condition that a judgment result is YES.

According to another aspect of the present invention, a processing method for Internet traffic sharing is provided. The method includes that: request information carrying applied traffic is sent to a second terminal; response information indicating that the second terminal determines to agree to share Internet traffic according to a predetermined limited shared traffic range and the applied traffic is received, herein the response information may carries traffic sharing information used to share the Internet traffic; and the Internet traffic of the second terminal is shared according to the traffic sharing information.

Alternatively, before sending the request information carrying the applied traffic to the second terminal, the method may further include that: determining that remaining traffic of a first terminal is less than the applied traffic.

Alternatively, said sharing the Internet traffic of the second terminal according to the traffic sharing information may include that: Internet traffic, shared to the first terminal, of the second terminal is monitored; whether the shared Internet traffic of the second terminal reaches the applied traffic is judged; and sharing of the Internet traffic of the second terminal is terminated under a condition that a judgment result is YES.

According to another aspect of the present invention, a processing device for Internet traffic sharing is provided. The device includes: a first receiving module, arranged to receive request information carrying applied traffic and sent by a first terminal; a first judgment module, arranged to judge whether the applied traffic is within a limited shared traffic range predetermined by a second terminal which provides traffic sharing; and a first sharing module, arranged to share the Internet traffic to the first terminal under a condition that a judgment result is YES.

Alternatively, the first sharing module includes: a first monitoring unit, arranged to monitor remaining traffic of the second terminal; a first judgment unit, arranged to judge whether the remaining traffic of the second terminal reaches a preset threshold value; and a first termination unit, arranged to terminate sharing of the Internet traffic to the first terminal under a condition that a judgment result of the first judgment unit is YES.

Alternatively, the first sharing module includes: a second monitoring unit, arranged to monitor Internet traffic shared to the first terminal; a second judgment unit, arranged to judge whether the shared Internet traffic used by the first terminal reaches the applied traffic; and a second termination unit, arranged to terminate sharing of the Internet traffic to the first terminal under the condition that a judgment result of the second judgment unit is YES.

According to another aspect of the present invention, a processing device for Internet traffic sharing is provided. The device includes: a first sending module, arranged to send request information carrying applied traffic to a second terminal; a second receiving module, arranged to receive response information indicating that the second terminal determines to agree to share Internet traffic according to a predetermined limited shared traffic range and the applied traffic, herein the response information carries traffic sharing information used to share the Internet traffic; and a second sharing module, arranged to share the Internet traffic of the second terminal according to the traffic sharing information.

Alternatively, the device further includes: a determination module, arranged to determine that remaining traffic of a first terminal is less than the applied traffic.

Alternatively, the second sharing module includes: a third monitoring unit, arranged to monitor Internet traffic, shared to the first terminal, of the second terminal; a third judgment unit, arranged to judge whether the shared Internet traffic of the second terminal reaches the applied traffic; and a third termination unit, arranged to terminate sharing of the Internet traffic of the second terminal under a condition that a judgment result of the third judgment unit is YES.

According to another aspect of the present invention, a terminal is provided, which includes the device mentioned in any of the abovementioned items.

According to the present invention, the request information carrying the applied traffic, sent by the first terminal, is received; whether the applied traffic is within the limited shared traffic range predetermined by the second terminal which provides traffic sharing is judged; and the Internet traffic is shared to the first terminal under a condition that the judgment result is YES, so that the problems of traffic resource waste and poor user experiences caused by incapability of effectively controlling resource traffic during resource sharing in the related art are solved, and effects of effectively controlling Internet resource sharing and avoiding huge phone bills of a sharing party are further achieved.

### Brief Description of Drawings

The drawings described here are used to provide a further understanding to the present invention, and form a part of the application. Schematic embodiments of the present invention and descriptions thereof are used to explain the present invention and not intended to form improper limits to the present invention. In the drawings:
FIG. 1 is a flowchart of a first processing method for Internet traffic sharing according to an embodiment of the present invention;
FIG. 2 is a flowchart of a second processing method for Internet traffic sharing according to an embodiment of the present invention;
FIG. 3 is a structure block diagram of a first processing device for Internet traffic sharing according to an embodiment of the present invention;
FIG. 4 is a first alternative structure block diagram of a first sharing module 36 in the first processing device for Internet traffic sharing according to an embodiment of the present invention;
FIG. 5 is a second alternative structure block diagram of the first sharing module 36 in the first processing device for Internet traffic sharing according to an embodiment of the present invention;
FIG. 6 is a structure block diagram of a second processing device for Internet traffic sharing according to an embodiment of the present invention;
FIG. 7 is an alternative structure block diagram of a second processing device for Internet traffic sharing according to an embodiment of the present invention;
FIG. 8 is an alternative structure block diagram of a second sharing module 66 in a second processing device for Internet traffic sharing according to an embodiment of the present invention;
FIG. 9 is a structure block diagram of a terminal according to an embodiment of the present invention; and
FIG. 10 is an architecture diagram of an Internet traffic sharing system for mobile terminals according to an embodiment of the present invention.

### Specific Embodiments

The present invention will be described below with reference to the drawings and embodiments in detail. It needs to be noted that the embodiments in the application and characteristics in the embodiments may be combined mutually under the condition of no conflicts.

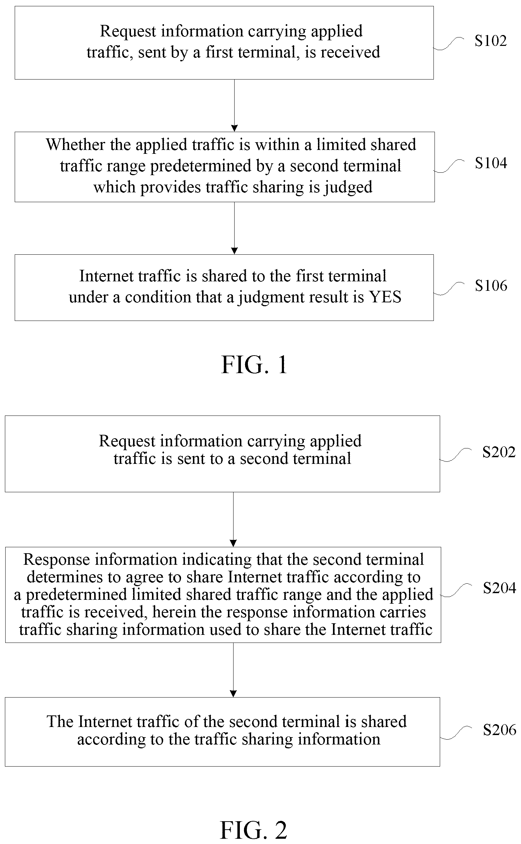

The embodiment provides a processing method for Internet traffic sharing. FIG. 1 is a flowchart of a first processing method for Internet traffic sharing according to the embodiment of the present invention. As shown in FIG. 1, the procedure includes the following steps.

In step S102, request information carrying applied traffic, sent by the first terminal, is received.

In step S104, whether the applied traffic is within a limited shared traffic range predetermined by a second terminal which provides traffic sharing is judged. Herein, it needs to be noted that the predetermined limited shared traffic range may include multiple kinds, and for example, it may include at least one of: remaining traffic of the second terminal and predetermined traffic exceeding the remaining traffic of the second terminal.

In step S106, Internet traffic is shared to the first terminal under the condition that a judgment result is YES.

By the above steps, shared traffic used by the first terminal is controlled for the second terminal, but in the related art the first terminal can use resources without effective limitation. Compared with the related art, the method not only effectively solves the problems of traffic resource waste and poor user experiences caused by incapability of effectively controlling resource traffic during resource sharing in the related art, but also achieves the effects of effectively controlling Internet resource sharing and avoiding huge phone bills of a sharing party.

When the Internet traffic is shared to the first terminal, multiple manners may be adopted. For example, manner 1 below may be adopted. The remaining traffic of the second terminal is monitored. Whether the remaining traffic of the second terminal reaches a preset threshold value is judged. Sharing of the Internet traffic to the first terminal is terminated under the condition that the remaining traffic of the second terminal reaches a preset threshold value. For another example, manner 2 below may also be adopted. Shared Internet traffic used by the first terminal is monitored. Whether the shared Internet traffic used by the first terminal reaches the applied traffic is judged. Sharing of the Internet traffic to the first terminal is terminated under the condition that a judgment result is YES. It needs to be noted that the two manners may also be combined for use, and of course, other traffic control manners may also be adopted, and will not be enumerated one by one herein.

FIG. 2 is a flowchart of a second processing method for Internet traffic sharing according to an embodiment of the present invention. As shown in FIG. 2, the procedure includes the following steps.

In step S202, request information carrying applied traffic is sent to a second terminal.

In step S204, response information indicating that the second terminal determines to agree to share Internet traffic according to a predetermined limited shared traffic range and the applied traffic is received, herein the response information carries traffic sharing information used to share the Internet traffic.

In step S206, the Internet traffic of the second terminal is shared according to the traffic sharing information.

By the above steps, shared traffic used by a first terminal is controlled for the first terminal, but in the related art the first terminal can use resources without effective limitation. Compared with the related art, the method not only effectively solves the problems of traffic resource waste and poor user experiences caused by incapability of effectively controlling resource traffic during resource sharing in the related art, but also achieves the effects of effectively controlling Internet resource sharing and avoiding huge phone bills of a sharing party.

There may be multiple conditions of requesting for sharing a traffic resource of another terminal. For example, when it is determined that remaining traffic of the first terminal is not enough for the applied traffic (namely less than the applied traffic), that is, traffic of the terminal itself is insufficient, and an application for traffic is made to the other terminal to achieve full utilization of the resource.

Alternatively, multiple manners may also be adopted for sharing the Internet traffic of the second terminal according to the traffic sharing information. For example, Internet traffic, shared to the first terminal, of the second terminal may be monitored; whether the shared Internet traffic of the second terminal reaches the applied traffic is judged; and sharing of the Internet traffic of the second terminal is terminated under the condition that a judgment result is YES. That is, resource sharing of the second terminal is effectively controlled at a first terminal side.

The embodiment further provides a processing device for Internet traffic sharing. The device is arranged to implement the abovementioned embodiments and alternative implementation modes, and that what has been described will not be elaborated repeatedly. For example, term "module", used below, may be a combination of software and/or hardware implementing a preset function. Although the device described in the following embodiments is alternatively implemented with software, implementation with hardware or a combination of software and hardware is also possible and conceivable.

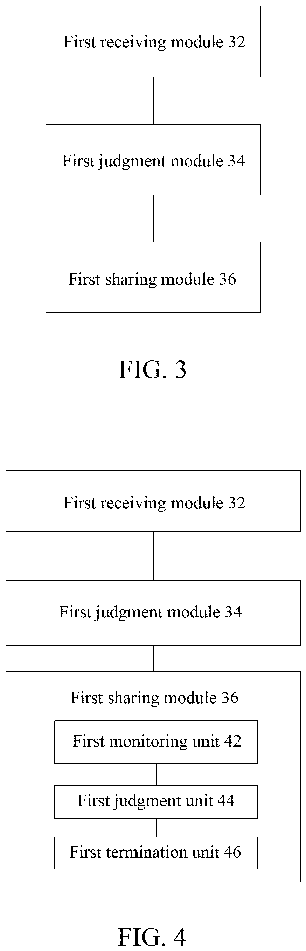

FIG. 3 is a structure block diagram of a first processing device for Internet traffic sharing according to an embodiment of the present invention. As shown in FIG. 3, the device includes a first receiving module 32, a first judgment module 34 and a first sharing module 36. The device will be described below.

The first receiving module 32 is arranged to receive request information carrying applied traffic and sent by a first terminal. The first judgment module 34 is connected to the first receiving module 32, and is arranged to judge whether the applied traffic is within a limited shared traffic range predetermined by a second terminal which provides traffic sharing. The first sharing module 36 is connected to the first judgment module 34, and is arranged to share Internet traffic to the first terminal under the condition that a judgment result of the first judgment module 34 is YES.

FIG. 4 is a first alternative structure block diagram of a first sharing module 36 in the first processing device for Internet traffic sharing according to an embodiment of the present invention. As shown in FIG. 4, the first sharing module 36 includes: a first monitoring unit 42, a first judgment unit 44 and a first termination unit 46. The first sharing module 36 will be described below.

The first monitoring unit 42 is arranged to monitor remaining traffic of the second terminal. The first judgment unit 44 is connected to the first monitoring unit 42, and is arranged to judge whether the remaining traffic of the second terminal reaches a preset threshold value. The first termination unit 46 is connected to the first judgment unit 44, and is arranged to terminate sharing of the Internet traffic to the first terminal under the condition that a judgment result of the first judgment unit 44 is YES.

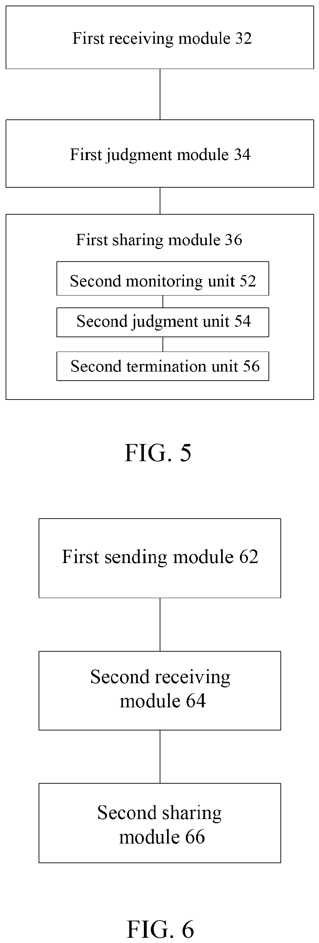

FIG. 5 is a second alternative structure block diagram of a first sharing module 36 in the first processing device for Internet traffic sharing according to an embodiment of the present invention. As shown in FIG. 5, the first sharing module 36 includes: a second monitoring unit 52, a second judgment unit 54 and a second termination unit 56. The first sharing module 36 will be described below.

The second monitoring unit 52 is arranged to monitor shared Internet traffic used by the first terminal. The second judgment unit 54 is connected to the second monitoring unit 52, and is arranged to judge whether the shared Internet traffic used by the first terminal reaches the applied traffic. The second termination unit 56 is connected to the second judgment unit 54, and is arranged to terminate sharing of the Internet traffic to the first terminal under the condition that a judgment result of the first judgment unit 54 is YES.

FIG. 6 is a structure block diagram of a second processing device for Internet traffic sharing according to an embodiment of the present invention. As shown in FIG. 6, the device includes: a first sending module 62, a second receiving module 64 and a second sharing module 66. The device will be described below.

The first sending module 62 is arranged to send request information carrying applied traffic to a second terminal. The second receiving module 64 is connected to the first sending module 62, and is arranged to receive response information indicating that the second terminal determines to agree to share Internet traffic according to a predetermined limited shared traffic range and the applied traffic. Herein, the response information carries traffic sharing information used to share the Internet traffic. The second sharing module 66 is connected to the second receiving module 64, and is arranged to share the Internet traffic of the second terminal according to the traffic sharing information.

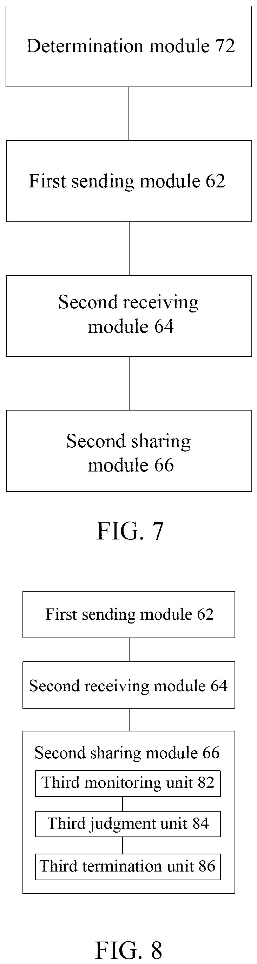

FIG. 7 is an alternative structure block diagram of the second processing device for Internet traffic sharing according to an embodiment of the present invention. As shown in FIG. 7, besides all the structures shown in FIG. 6, the device further includes: a determination module 72. The determination module 72 will be described below.

The determination module 72 is connected to the first sending module 62, and is arranged to determine that remaining traffic of a first terminal is less than the applied traffic.

FIG. 8 is an alternative structure block diagram of a second sharing module 66 in the second processing device for Internet traffic sharing according to an embodiment of the present invention. As shown in FIG. 8, the second sharing module 66 includes: a third monitoring unit 82, a third judgment unit 84 and a third termination unit 86. The second sharing module 66 will be described below.

The third monitoring unit 82 is arranged to monitor Internet traffic, shared to the first terminal, of the second terminal. The third judgment unit 84 is connected to the third monitoring unit 82, and is arranged to judge whether the shared Internet traffic of the second terminal reaches the applied traffic. The third termination unit 86 is connected to the second judgment unit 84, and is arranged to terminate sharing of the Internet traffic of the second terminal under the condition that a judgment result of the third judgment unit is YES.

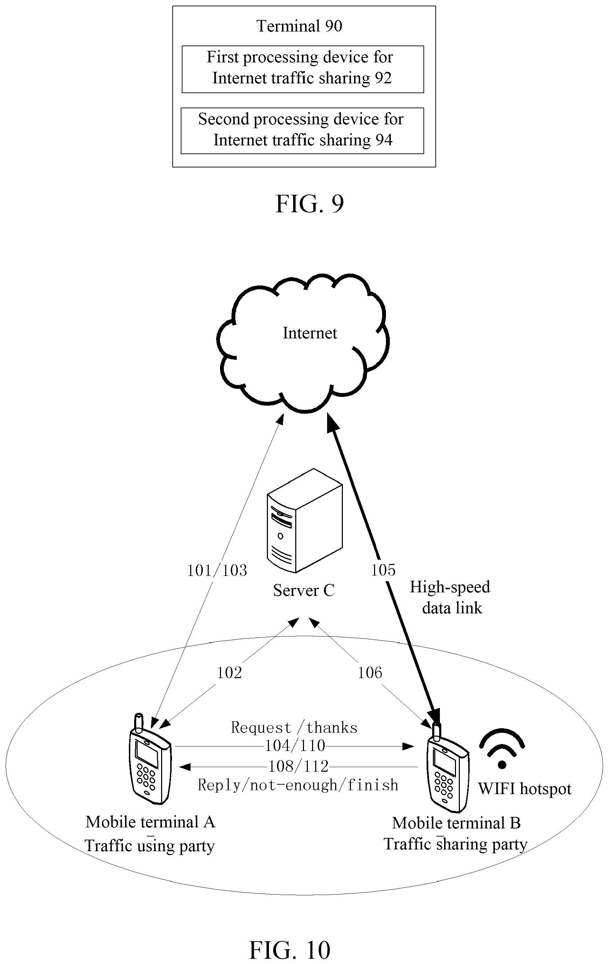

FIG. 9 is a structure block diagram of a terminal according to an embodiment of the present invention. As shown in FIG. 9, the terminal 90 includes any of the first processing device for Internet traffic sharing 92 and/or the second processing device for Internet traffic sharing 94.

For the problem of traffic resource waste caused by Internet traffic resource unbalance and the shortcoming of huge phone bills easily brought to a sharing party in a process of sharing Internet traffic by a mobile terminal through a WIFI hotspot in the related art, the embodiment provides a solution for sharing Internet traffic by a mobile terminal. The technical solution is as follows.

A mobile terminal (i.e. the abovementioned second terminal) serving as a traffic sharing party sets its own sharing state to be open through an agent module, thereby a mobile terminal (i.e. the abovementioned first terminal) serving as a traffic using party is allowed to apply for Internet traffic sharing (i.e. a traffic application broadcast message sent by the traffic using party is allowed to be received), and a real-time traffic using condition is queried through a server. The mobile terminal serving as the traffic using party sets its Internet traffic sharing state to be closed, acquires capacity information of an Internet resource to be accessed or other available traffic limit information from the server through the agent module, then packages the information in a request message and sends it to the Internet traffic sharing party as a broadcast message to apply for directional/quantitative Internet traffic through a wireless interface (such as a Bluetooth/Near Field Communication NFC interface). The agent module of the traffic sharing party acquires real-time remaining traffic condition from the server, and judges whether to allow the applicant to use its traffic and join a WIFI hotspot created by the traffic sharing party for the traffic using party according to an applied traffic limit carried in the request message and configuration information of the traffic sharing party for traffic sharing. In a traffic sharing process, a monitoring module monitors current traffic using conditions of the mobile terminals (the traffic using party and the traffic sharing party), and once a threshold value is reached, the monitoring module immediately notifies the agent module to cut off the WIFI connection.

The solution may be implemented by the following steps.

In S1, a mobile terminal installs an Internet traffic sharing system, herein the system including two modules: an agent module and a monitoring module.

In S2, after the Internet traffic sharing system is started, the agent module queries whether a current Internet traffic sharing state of the terminal is open or closed, and performs different query operations according to different states.

In S3, if the Internet traffic sharing state of the terminal is open, the mobile terminal serves as a traffic sharing party, and the agent module queries current remaining Internet traffic of the mobile terminal from a server through a data link, waits for a request broadcast message, initiated by another Internet traffic sharing system with a closed state, to apply for directional/quantitative Internet traffic, judges whether to create a WIFI hotspot to share Internet traffic, and returns WIFI hotspot information/denial message to a mobile terminal which applies for the traffic through a relay message.

In S4, if the Internet traffic sharing state of the terminal is closed, the mobile terminal serves as a traffic using party, and the agent module acquires capacity information of a resource to be accessed by the mobile terminal or traffic limit information from the server through the data link, packages the information in a request broadcast message and sends it to a traffic sharing party to apply for directional/quantitative Internet traffic through a wireless interface (such as a Bluetooth/NFC interface).

In S5, the monitoring module is arranged to save the capacity information of the Internet resource of the traffic using party or other available traffic limit information and the remaining traffic information of the traffic sharing party, which are queried from the server. The monitoring module is also arranged to monitor the traffic using condition, and notify the agent module to cut off a connection of the WIFI hotspot when used traffic exceeds a threshold value.

By the abovementioned embodiments and alternative implementation modes, a first-level control mechanism of the server is introduced to acquire the capacity information of the Internet resource to be accessed from the server and implement real-time traffic monitoring of the traffic sharing party through the server. In addition, a second-level traffic monitoring control mechanism of the monitoring module for the traffic sharing party and the traffic using party is introduced to implement security line control over the Internet traffic limit, so that the risk problem of huge phone bills easily brought to the traffic sharing party during sharing of the Internet traffic through the WIFI hotspot is solved.

The implementation mode of the present invention will be described below with reference to the drawing.

FIG. 10 is an architecture diagram of an Internet traffic sharing system for mobile terminals according to an embodiment of the present invention. As shown in FIG. 10, the system architecture includes mobile terminal A, mobile terminal B and server C.

Herein, the mobile terminal A is a mobile terminal at least supporting a WIFI function and a data connection Internet access function, and is installed with a traffic sharing system client.

The mobile terminal B is a mobile terminal supporting a WIFI hotspot function and a high-speed data connection Internet access function, and is installed with a traffic sharing system client.

The server C records real-time Internet traffic conditions of the mobile terminal A and mobile terminal B, and provides query service.

On the basis of the system architecture, an Internet traffic sharing method for the mobile terminals includes the following steps.

In step S2, the mobile terminal A sets a sharing state of the traffic sharing client to be closed, that is, the mobile terminal is set to be a traffic using party, and normally accesses the Internet.

In Step S4, an agent module of the mobile terminal A queries and acquires the real-time traffic using condition of the mobile terminal A from a server.

In Step S6, a monitoring module of the mobile terminal A monitors Internet access behaviors of a user. When the user is intended to access a high-capacity file and a remaining traffic threshold value of mobile terminal A is exceeded (or the user has a high-rate Internet access requirement, such as watching of an online video), the traffic sharing client may prompt the user whether to select "a manner of sharing traffic through a nearby WIFI hotspot" to continue access.

In Step S8, the agent module of the traffic using party (i.e. the mobile terminal A) uses size information of the high-capacity file to be accessed or quantitative traffic numerical value as an applied traffic limit threshold value, and packages it in a request broadcast message to broadcast nearby mobile terminal A.

In Step S10, the mobile terminal B sets a sharing state of the traffic sharing client to be open, that is, the mobile terminal is set to be a traffic sharing party, and may normally access the Internet at a high speed.

In Step S12, an agent module of the mobile terminal B queries and acquires the real-time traffic using condition of the mobile terminal B from the server.

In Step S14, mobile terminal B receives the request broadcast message of the mobile terminal A through a wireless interface (such as a Bluetooth/NFC interface), and parses the applied traffic limit threshold value. The mobile terminal B makes a judgment according to the traffic condition acquired from the server and the applied traffic limit threshold value of mobile terminal A. A user is prompted to confirm traffic sharing and executes subsequent processing Step S16 if remaining traffic of the mobile terminal B is greater than the applied traffic limit threshold value. An alarm is sent to the user and does not execute traffic sharing operation if the remaining traffic is less than the applied traffic limit threshold value.

In Step S16, if the user of the mobile terminal B agrees to share traffic, the mobile terminal B randomly generates hotspot information and creates a WIFI hotspot, and its agent module packages the hotspot information in a relay message to feed back to the mobile terminal A through the wireless interface (such as the Bluetooth/NFC interface). In addition, a monitoring module of the mobile terminal B starts monitoring a local traffic condition and the traffic condition at the server. If the user does not agree, the WIFI hotspot is not automatically created.

In Step S18, mobile terminal A parses the WIFI hotspot information from the relay message, and initiates a connection to the hotspot. If the connection is successful, the file applied before is accessed or the Internet is accessed by virtue of a WIFI network, and in addition, the monitoring module of mobile terminal A starts local traffic monitoring. If the connection fails, the user of the mobile terminal A is prompted, and the request message is continued to be broadcasted (Step S8).

In Step S20, when the monitoring module of the mobile terminal A monitors that currently used traffic reaches the applied traffic limit threshold value, the agent module of the traffic sharing client sends a thanks message to the mobile terminal B, automatically cuts off the connection with the current WIFI hotspot, simultaneously prompts the user of mobile terminal A that the applied limit has been used up, and automatically cuts off the network connection.

In Step S22, the agent module of mobile terminal B detects a state of the connection with mobile terminal A after receiving the thanks message. The agent module of mobile terminal B forcibly cuts off the WIFI connection with mobile terminal A if the connection has yet not been cut off, and simultaneously prompts the user of mobile terminal B that traffic sharing with mobile terminal A has been finished.

In Step S24, when the monitoring module of the mobile terminal B monitors that the current remaining traffic of the mobile terminal B has reached a lower limit threshold value (this is a first-priority judgment condition), the agent module sends a not-enough message to the mobile terminal A, and closes the WIFI hotspot.

In Step S26, when the monitoring module of the mobile terminal B monitors that the remaining traffic of the mobile terminal B does not reach the lower limit threshold value and a traffic limit shared to the mobile terminal A reaches the applied traffic limit threshold value of the mobile terminal A (this is a second-priority judgment condition), the agent module sends a finish message to the mobile terminal A, cuts off the WIFI connection with the mobile terminal A, and simultaneously prompts the user of the mobile terminal B that the traffic applied by the mobile terminal A has been used up.

In Step S28, the agent module of the mobile terminal A receives the not-enough message, and prompts the user of the mobile terminal A that the remaining traffic of the traffic sharing is not enough, and the Step 8 is continued.

In Step S30, the agent module of the mobile terminal A receives the finish message, detects a current state of the WIFI connection with the mobile terminal B, forcibly cuts off the WIFI connection with the mobile terminal B if the connection has yet not been cut off, and simultaneously prompts the user of the mobile terminal A that the mobile terminal A has used up the applied traffic.

Alternatively, the traffic sharing party may also monitor its own remaining traffic condition through the monitoring module only to further control the state of the WIFI connection through the agent module. That is, Step S24 to Step S28 may cooperate with Step S20 to Step S22, and may also work independently.

Obviously, those skilled in the art should know that each module or each step of the present invention may be implemented by a universal computing device, and the modules or steps may be concentrated on a single computing device or distributed on a network formed by a plurality of computing devices. Alternatively, they may be implemented by program codes executable for the computing devices, so that the modules or steps may be stored in a storage device for execution with the computing devices, and in some circumstances the shown or described steps may be executed in sequences different from those described here, or may form each integrated circuit module respectively, or multiple modules or steps therein may form a single integrated circuit module for implementation. As a consequence, the present invention is not limited to any specific hardware and software combination.

The above is only the alternative embodiment of the present invention and not intended to limit the present invention. For those skilled in the art, the present invention may have various modifications and variations. Any modifications, equivalent replacements, improvements and the like within the rule and principle of the present invention shall fall within the scope of protection of the present invention.

### Industrial Applicability

As mentioned above, the abovementioned embodiments and alternative implementation modes not only solve the problems of traffic resource waste and poor user experiences caused by incapability of effectively controlling resource traffic during resource sharing in the related art, and further achieve effects of effectively controlling Internet resource sharing and avoiding huge phone bills of a sharing party.

## Claims

1. A processing method for Internet traffic sharing, comprising:
receiving request information carrying applied traffic and sent by a first terminal;
judging whether the applied traffic is within a limited shared traffic range predetermined by a second terminal which provides traffic sharing; and
sharing the Internet traffic to the first terminal under a condition that a judgment result is YES.

2. The method according to claim 1, wherein the predetermined limited shared traffic range comprises at least one of:
remaining traffic of the second terminal and predetermined traffic exceeding the remaining traffic of the second terminal.

3. The method according to claim 1, wherein said sharing the Internet traffic to the first terminal comprises:
monitoring remaining traffic of the second terminal;
judging whether the remaining traffic of the second terminal reaches a preset threshold value; and
terminating sharing of the Internet traffic to the first terminal under a condition that a judgment result is YES.

4. The method according to claim 1, wherein said sharing the Internet traffic to the first terminal comprises:
monitoring shared Internet traffic used by the first terminal;
judging whether the shared Internet traffic used by the first terminal reaches the applied traffic; and
terminating sharing of the Internet traffic to the first terminal under a condition that a judgment result is YES.

5. A processing method for Internet traffic sharing, comprising:
sending request information carrying applied traffic to a second terminal;
receiving response information indicating that the second terminal determines to agree to share Internet traffic according to a predetermined limited shared traffic range and the applied traffic, wherein the response information carries traffic sharing information used to share the Internet traffic; and
sharing the Internet traffic of the second terminal according to the traffic sharing information.

6. The method according to claim 5, wherein, before sending the request information carrying the applied traffic to the second terminal, the method further comprises:
determining that remaining traffic of a first terminal is less than the applied traffic.

7. The method according to claim 5, wherein said sharing the Internet traffic of the second terminal according to the traffic sharing information comprises:
monitoring Internet traffic, shared to the first terminal, of the second terminal;
judging whether the shared Internet traffic of the second terminal reaches the applied traffic; and
terminating sharing of the Internet traffic of the second terminal under a condition that a judgment result is YES.

8. A processing device for Internet traffic sharing, comprising:
a first receiving module, arranged to receive request information carrying applied traffic and sent by a first terminal;
a first judgment module, arranged to judge whether the applied traffic is within a limited shared traffic range predetermined by a second terminal which provides traffic sharing; and
a first sharing module, arranged to share the Internet traffic to the first terminal under a condition that a judgment result is YES.

9. The device according to claim 8, wherein the first sharing module comprises:
a first monitoring unit, arranged to monitor remaining traffic of the second terminal;
a first judgment unit, arranged to judge whether the remaining traffic of the second terminal reaches a preset threshold value; and
a first termination unit, arranged to terminate sharing of the Internet traffic to the first terminal under a condition that a judgment result of the first judgment unit is YES.

10. The device according to claim 8, wherein the first sharing module comprises:
a second monitoring unit, arranged to monitor shared Internet traffic used by the first terminal;
a second judgment unit, arranged to judge whether the shared Internet traffic used by the first terminal reaches the applied traffic; and
a second termination unit, arranged to terminate sharing of the Internet traffic to the first terminal under a condition that a judgment result of the second judgment unit is YES.

11. A processing device for Internet traffic sharing, comprising:
a first sending module, arranged to send request information carrying applied traffic to a second terminal;
a second receiving module, arranged to receive response information indicating that the second terminal determines to agree to share Internet traffic according to a predetermined limited shared traffic range and the applied traffic, wherein the response information carries traffic sharing information used to share the Internet traffic; and
a second sharing module, arranged to share the Internet traffic of the second terminal according to the traffic sharing information.

12. The device according to claim 11, wherein the device further comprises
a determination module, arranged to determine that remaining traffic of a first terminal is less than the applied traffic.

13. The device according to claim 11, wherein the second sharing module comprises:
a third monitoring unit, arranged to monitor Internet traffic, shared to the first terminal, of the second terminal;
a third judgment unit, arranged to judge whether the shared Internet traffic of the second terminal reaches the applied traffic; and
a third termination unit, arranged to terminate sharing of the Internet traffic of the second terminal under a condition that a judgment result of the third judgment unit is YES.

14. A terminal, comprising the device according to any one of claims 8-10 and/or the device according to any one of claims 11-13.
